# EUROPEAN PATENT SPECIFICATION

(11) **EP 3 470 655 B1**
(45) Date of publication and mention of the grant of the patent: **22.04.2020**
(21) Application number: 17425096.9
(22) Date of filing: 10.10.2017
(51) Int. Cl.: F02F 3/00

(54) **PISTON AND METHOD OF MANUFACTURING THEREOF**
KOLBEN UND VERFAHREN ZUR HERSTELLUNG DAVON
PISTON ET SON PROCÉDÉ DE FABRICATION ASSOCIÉ

(43) Date of publication of application: 17.04.2019
(73) Proprietor: Lombardini S.r.l., 42124 Reggio Emilia (IT)
(72) Inventor: Bonanni, Massimiliano, 43124 Parma (IT); Fregni, Paolo, 42015 Correggio (Reggio Emilia) (IT); Gaioli, Simone, 42124 Reggio Emilia (IT)
(74) Representative: Corradini, Cesare

(56) References cited:
- DE-A1-102006 029 040
- DE-A1-102012 208 007
- KR-A- 20140 034 244
- US-A- 5 174 193

## Description

### BACKGROUND

A piston is a moving component that is contained by a cylinder of reciprocating engines, reciprocating pumps, gas compressors and pneumatic cylinders, and other mechanisms. In an engine, the piston can transfer force from expanding gas in the cylinder to the crankshaft via a piston rod and/or connecting rod. In a pump, the function is reversed and force is transferred from the crankshaft to the piston for the purpose of compressing or ejecting the fluid in the cylinder. In some engines, the piston also acts as a valve by covering and uncovering ports in the cylinder wall. An example of a piston manufactured with cast molding process is shown in document KR-20140034244.

### SUMMARY

According to some aspects, systems and methods provide a piston and process for manufacturing a piston includes an upper part providing an upper combustion surface including a top land, a land ring and a combustion bowl. An undercrown surface is formed under the combustion bowl. A lower part including pin bosses and a piston skirt are formed under the undercrown surface. At least one of the upper part and the lower part are formed with metal injection molding.

According to some aspects, the piston is formed from multiple parts.

According to some aspects, the multiple parts are joined by sinter bonding, friction welding, brazing, flanging or pin coupling.

According to some aspects, one part is formed with MIM (Metal Injection Molding) and the other part is formed by another process.

According to some aspects, both parts are formed with MIM.

Other systems, methods, features, and advantages is or will become apparent upon examination of the following figures and detailed description.

It is intended that all such additional systems, methods, features, and advantages be included within this description and be protected by the accompanying claims.

### BRIEF DESCRIPTION OF THE DRAWINGS

In association with the following detailed description, reference is made to the accompanying drawings, where like numerals in different figures can refer to the same element. The features of the drawings are not necessarily drawn to scale.
FIG. 1 is a schematic of an example piston installed on an engine.
FIG. 2A is a side cutaway view of an example piston.
FIG. 2B is a side cutaway view of an example piston.
FIG. 3A is a side cutaway view of another example piston.
FIG. 3B is a side cutaway view of another example piston.
FIG. 4A is a side cutaway view of another example piston.
FIG. 4B is a side cutaway view of another example piston.
FIG. 5A is a side cutaway view of another example piston.
FIG. 5B is a side cutaway view of another example piston.
FIG. 5C is a portion of a side cutaway view of another example piston.
FIG. 6A is a side cutaway view of another example piston.
FIG. 6B is a side cutaway view of another example piston.
FIG. 6C is a portion of a side cutaway view of another example piston.
FIG. 7A is a side cutaway view of another example piston.
FIG. 7B is a side cutaway view of another example piston.
FIG. 7C is a portion of a side cutaway view of another example piston.
FIG. 8A is a side cutaway view of another example piston.
FIG. 8B is a side cutaway view of another example piston.
FIG. 8C is a portion of a side cutaway view of another example piston.

### DETAILED DESCRIPTION

While the disclosure may be susceptible to embodiment in different forms, there is shown in the drawings, and herein is described in detail, a specific embodiment with the understanding that the present disclosure is to be considered an exemplification of the principles of the disclosure, and is not intended to limit the disclosure to that as illustrated and described herein.

Therefore, unless otherwise noted, features disclosed herein may be combined together to form additional combinations that were not otherwise shown for purposes of brevity. It is further appreciated that in some embodiments, one or more elements illustrated by way of example in a drawing(s) may be eliminated and/or substituted with alternative elements.

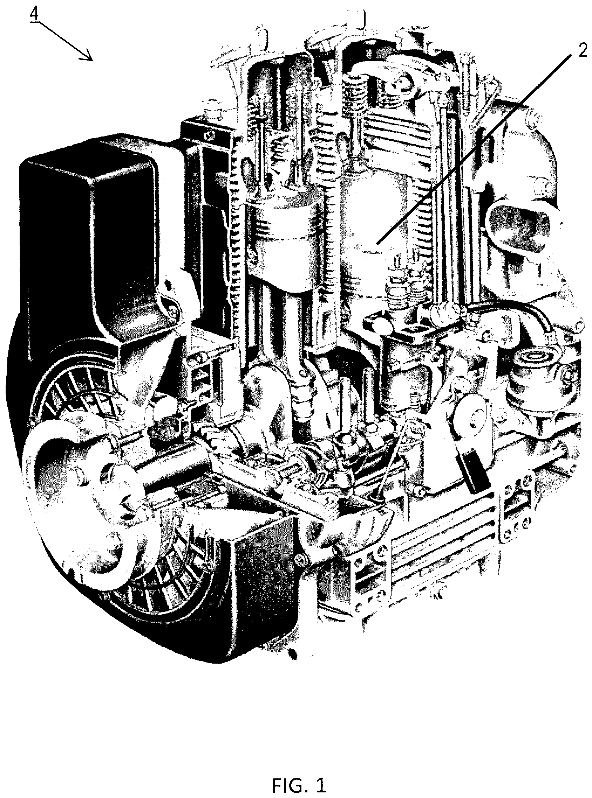

FIG. 1 is a schematic of an example piston 2 installed on an engine 4. The engine 4 can include small utility internal combustion engines capable of being employed in a variety of applications including, for example, a variety of types of power machinery. For example, the engine 4 can be a KDI Kohler Direct Injection engine. It will be understood that in some cases the engine 4 can be employed in land vehicles such as lawn mowers, snow blowers, and other small vehicles such as utility vehicles. Other non-limiting applications can include power washers, air compressors, construction machines, etc. In alternate embodiments, it is also possible that the piston 2 is implemented in conjunction with other types of engines (e.g., other than small utility engines) and/or in conjunction with other types of applications and/or vehicles. In FIG. 1, it is envisioned that the piston 2 is installed onto the engine 4 by the engine's manufacturer. However, it is also envisioned that the piston 2 can be sold as an after-market add-on product capable of being installed on an engine by a party other than the engine's manufacturer.

In some example, the piston 2, or at least part of the piston 2, is manufactured using a metal injection molding (MIM) process, as described in more detail below. In some examples, the piston 2 is manufactured using one or more blanks. In the case of more than one blank used to manufacture the piston 2, the parts of the piston 2 can be joined together using sinter bonding and/or welding by induction or friction, and/or by including a piston pin to join the pieces and provide an articulated assembly.

In some examples, the parts of the piston 2 can be manufactured using different processes, including but not limited to, MIM, casting, forging, machining of billets, etc. In some examples, the piston 2 is made from a lost wax casting. Material used to produce pistons include, but are not limited to, aluminum alloys, steel alloys, etc. In some examples, the piston 2 is manufactured from a steel alloy powder. In some examples, the MIM process can be configured to provide a cooling gallery to the piston 2. In some examples, the piston 2 does not include a cooling gallery. In some examples, the piston can endure high peak pressures, e.g., up to about 250 bar or more.

For multi-part pistons 2, in some examples the different parts are made by the same material and/or process, and in other examples the parts are made using different materials and/or processes. For example, both parts can be manufactured using the MIM process or one part is manufactured by the MIM process and another part is manufactured by forging a metal billet, etc. Table 1 contains some examples of possible combinations used to produce piston blanks. Other combinations are possible.

**Table 1:**

| | #1 | #2 | #3 | #4 | #5 |
|---|---|---|---|---|---|
| Part 1 | MIM | MIM | MIM | MIM | MIM |
| Part 2 | MIM | Forged | Cast / Microcast | Billet Machining | Others |
| JOINT METHOD | Sinter bonding Friction welding Brazing Flanging or pin coupling | Sinter bonding Friction welding Brazing Flanging or pin coupling | Sinter bonding Friction welding Brazing Flanging or pin coupling | Sinter bonding Friction welding Brazing Flanging or pin coupling | Sinter bonding Friction welding Brazing Flanging or pin coupling |

Combinations of parts produced with different manufacturing types can be joined in various ways, e.g., sinter bonding, friction welding, brazing, flanging or pin coupling, etc. In some examples, the MIM process can be used to produce a solid piston 2, or MIM can be used to produce one or more of parts of piston 2. Sinter bonding can be used to join together the MIM formed parts with parts formed with the same process or with parts formed with different processes to provide a solid piston 2. As described in more detail below, the piston 2 can be formed with one or more parts and/or with different geometrical features, including but not limited to: single part oil cooling galleryless, single part with cooling gallery, multi-part galleryless, multi-part with cooling gallery, cooling gallery formed both in upper and lower parts of the piston 2, lower part of the cooling gallery formed on the crown of the piston and closed at its top with a cap, cooling gallery formed in the undercrown of a piston main blank and closed with a cap to create the floor and the inlet and outlet opening port of oil cooling gallery, etc. In some examples, a multi-part piston 2 can be joined by a joint and pin, as described in more detail below. The joint can include a cylindrical or other shaped opening.

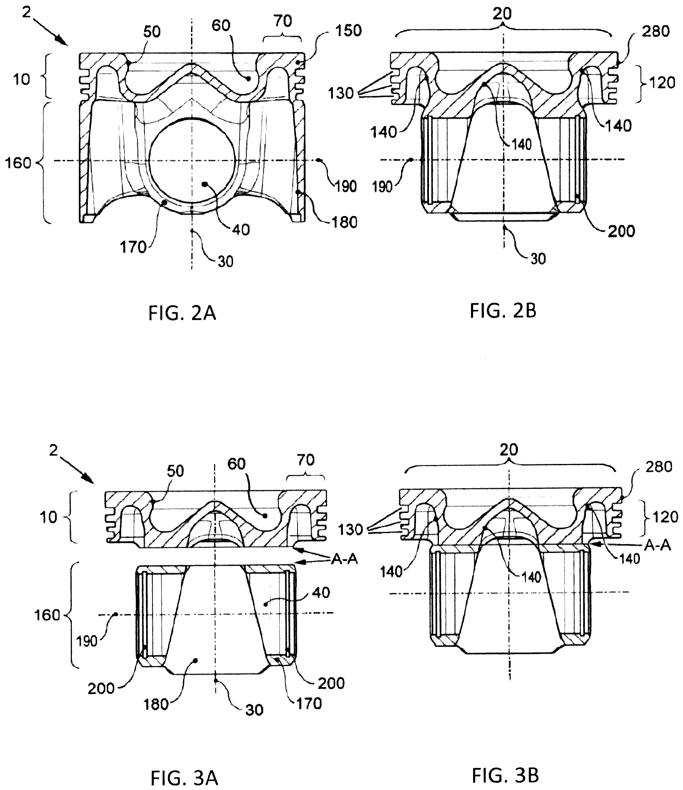

FIGS. 2A and 2B are side cutaway views of an example piston 2. In some examples, the piston 2 is a one-piece piston manufactured from a single blank using a MIM process. The piston 2 includes an upper part 10 including a top wall 20, which provides an upper combustion surface 50 that is directly exposed to combustion within the cylinder bore of the engine 4.

The upper combustion surface 50 includes valve pockets (if present), combustion bowl 60 and piston crown 70. The upper part can also include top land 280 and ring land 120 that include ring grooves 130. An undercrown surface 140 is formed underside the combustion bowl wall portion. The undercrown 140 is the surface that is visible, excluding the pin bores 40, when observing the piston 2 straight on from the bottom. The main body 150 can further include a lower part 160 that includes a pair of pin bosses 170 and piston skirt 180. The pin bosses 170 each having a pin bore 40 are laterally spaced from one another coaxially along a pin bore axis 190 that extends perpendicularly to the central longitudinal axis 30.

Each pin boss 170 have generally a snap ring groove 200 spaced from one another such as to fit the length of the piston pin.

FIGS. 3A and 3B are side cutaway views of another example piston 2. In FIGS. 3A and 3B, the piston 2 is a galleryless piston constructed with at least two pieces, e.g., upper part 10 and lower part 160, joined together.

One of the semi-finished product blanks can be formed as the upper part and the second semi-finished product blank as piston skirt 180 of the lower part 160. The upper part 10 and lower part 160 are fixedly joined, e.g., by welding, including friction welding, induction welding, sinter bonding or otherwise, to form the piston 2. The upper part 10 includes a top wall 20, which provides an upper combustion surface 50 that is directly exposed to combustion within the cylinder bore of the engine 2. The upper combustion surface 50 includes valve pockets (if present), combustion bowl 60 and piston crown 70. Upper part can include top land 280 and ring land 120 that include ring grooves 130. An undercrown surface 140 is formed underside the combustion bowl wall portion. The undercrown 140 is the surface that is visible, excluding the pin bores 40, when observing the piston straight on from the bottom. The piston further includes a lower part 160 that includes a pair of pin bosses 170 and piston skirt 180. The pin bosses 170 each have a pin bore 40 that are laterally spaced from one another coaxially along a pin bore axis 190 that extends perpendicularly to the central longitudinal axis 30. Each pin boss 170 can have generally a snap ring grooves 200 spaced from one another such as to fit the length of the piston pin.

The piston can be formed joining upper part and lower part 160 through a junction surface (A-A). The junction surface (A-A) could have various shapes. Upper part and lower part 160 can be formed with different processes, including MIM. The upper part and lower part 160 can include the same or different material compositions from one another. Joining the upper part and lower part 160 can be accomplished in various ways, including sinter bonding. It is also possible to join upper part and lower part 160 of piston 2 with other techniques, including but not limited to, friction welding, brazing, induction welding, etc.

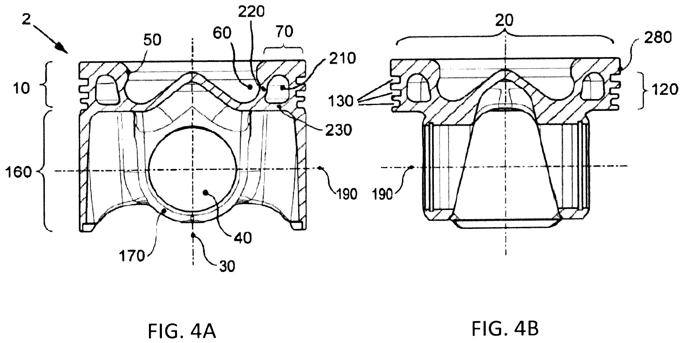

The pistons 2 of FIGS. 4A 8C include a cooling gallery. In internal combustion engine applications, including diesel engines, pistons 2 can be provided with piston bodies formed with a partially closed gallery, including cooling oil inlet and outlet openings. For example, the oil coming from crankcase circulates through the gallery 210 and cools parts of the piston 2 like annular upper rims, extending around combustion bowl and the ring land 120 which can be most susceptible to damage from combustion heat.

FIGS. 4A and 4B are side cutaway views of another example piston 2. The piston 2 in FIGS. 4A and 4B is a single part piston, e.g., produced as a monolithic piston with internal cooling gallery 210. The gallery 210 is located below the upper crown 70 and runs between the external wall 220 of the combustion bowl 60 and the ring land 120. In some examples, the gallery 210 can be included during the casting process. The piston 2 with the cooling gallery can be produced, for example, in aluminum alloy. The cooling galleries 210 can include annular or ring-shapes with constant shaped cross-sections and are generally formed in radially inward alignment with the piston ring belt. The galleries 210 can be adjacent the top wall 20 and rim of the piston 2 and bounded by an inner wall 220 adjacent the combustion bowl 60. The gallery 210 channel is substantially closed at the bottom by a floor wall 230 provided with inlet and outlet openings for the oil cooling flow. For steel alloy pistons, the gallery 210 can be formed by joining together upper and lower parts, while for aluminum alloy casted pistons the gallery can be formed by a salt core in the casting process, for example.

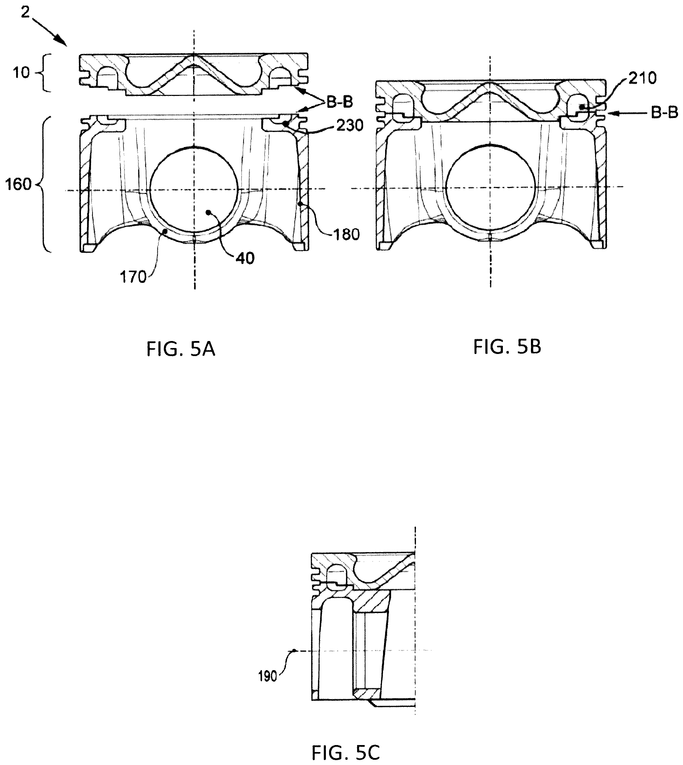

FIGS. 5A, 5B, and 5C are side cutaway views of another example piston 2. The piston 2 in FIGS. 5A, 5B, and 5C includes an upper part 10 and a lower part 160 joined to each another at (B-B). The lower part 160 includes skirt portions 180 and pin bosses 170 with pin bores 40 aligned axially along a pin bore axis 190. The upper part 10 and lower part 160 are fixedly secured together, such as by welding, including friction welding, induction welding, sinter bonding, etc., to form the piston 2. Both the lower part 160 and the upper part 10 of piston can include a portion of the oil cooling gallery 210.

The lower part 160 includes floor 230, with inlet and outlet openings for inlet and outlet of the cooling oil. In some examples, junction of lower part 160 and upper part 10 create the oil cooling gallery 210. The upper part 10 and lower part 160 can be made of a steel or other material. For example, the upper part 10 and/or the lower part 160 can be made of MIM, casting, forging, machining, etc., in vary combinations including those described in table 1. The upper part 10 and the lower part 160 can both be manufactured from the same materials or the upper part 10 can be made from one material and the lower part 160 made from a different material.

The piston 2 is formed by joining upper part 10 and lower part 160 through at junction surface (B-B). Junction surface (B-B) can include various shapes, e.g., the shown shape or a different shape. In some examples, sinter bonding can be used to join the upper part 10 and lower part 160. Other bonding techniques can be used, including but not limited to, friction welding, brazing, induction welding, etc.

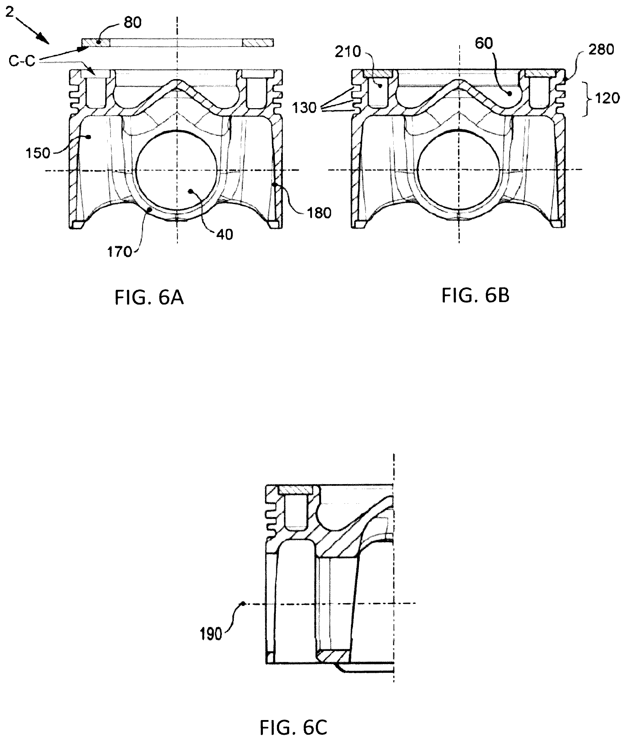

FIGS. 6A, 6B, and 6C are side cutaway views of another example piston 2. The piston 2 in FIGS. 6A, 6B, and 6C can include a main body 150 and a top cover 80. The main body 150 of piston can include combustion bowl 60, top land 280 and ring land 120 that provide ring grooves 130. The main body 150 also includes the cooling gallery 210 with inlet and outlet openings. The main body 150 can further include a lower part that incorporates a pair of pin bosses 170 and piston skirt 180. The pin bosses 170 can each have a pin bore 40 laterally spaced from one another coaxially along a pin bore axis 190 that extends perpendicularly to the central longitudinal axis. Upper part of the main body 150 provides a cap that closes the cooling gallery 210 at a top surface and creates the piston crown. Joining the main body 150 and the top cover 80 create the oil-cooling gallery 210. The top cover 80 and/or main body 150 can be made of a steel material. For example, top cover 80 and/or main body 150 can be made by MIM, casting, forging, machining, etc., and joined as shown in Table 1 for example. Top cover 80 and main body 150 can include the same or different composition material. The piston 2 can be formed by joining the top cover 80 and main body 150, e.g., via sinter bonding at a junction surface (C-C). Other bonding technique include, but are not limited to, friction welding, brazing, induction welding, etc. Junction surface (C-C) can have different shapes.

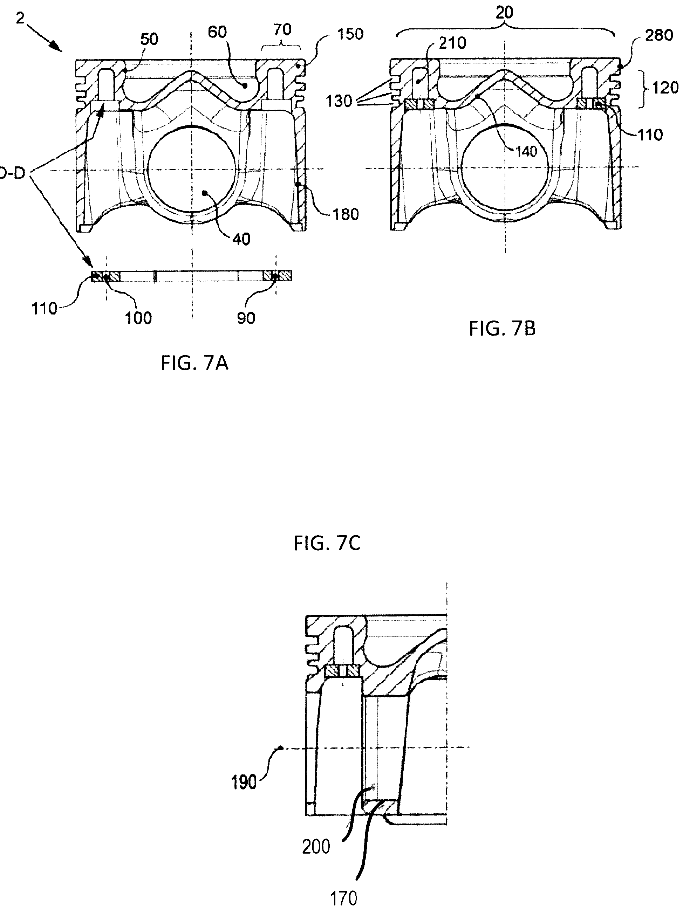

FIGS. 7A, 7B, and 7C are side cutaway views of another example piston 2. The piston 2 in FIGS. 7A, 7B, and 7C includes a main body 150 and a lower part 110, e.g., ring cap. The body 150 can include one or more of a combustion bowl 60, piston crown 70, and top land 280 and ring land 120 that include ring grooves 130. An undercrown surface 140 is formed on an underside of the combustion bowl 60. The undercrown 140 is described here to be the surface that is visible excluding the pin bores 40, when observing the piston 2 from the bottom. The body 150 further includes a lower part that includes a pair of pin bosses 170 and piston skirt 180. The pin bosses 170 can each have a pin bore 40 laterally spaced from one another coaxially along a pin bore axis 190 that extends perpendicularly to the central longitudinal axis. Each pin boss 170 can have a snap ring groove 200; snap ring grooves 200 are spaced from one another along the pin bore axis 190 to fit the pin. The main body 150 includes the cooling gallery 210 without its floor. A lower part 110 that can be builded in one or more pieces and forms the floor of the cooling galley 210 that partially closes the gallery 210 at its bottom side and includes inlet opening 100 and outlet opening 90 for the cooling oil flow. The junction of main body 150 and a lower part 110 create oil cooling gallery 210. The main body 150 and a lower part 110 can be made of a steel material with a process including, but not limited to, MIM, casting forging, machining, etc. The main body 150 and a lower part 110 can be manufactured from the same or different materials.

The piston 2 can be formed by joining the main body 150 and a lower part 110 at junction surface (D-D). Junction surface (D-D) can have various shapes. Joining MIM created parts can include sinter bonding or other technique including but not limited to friction welding, brazing, induction welding, etc.

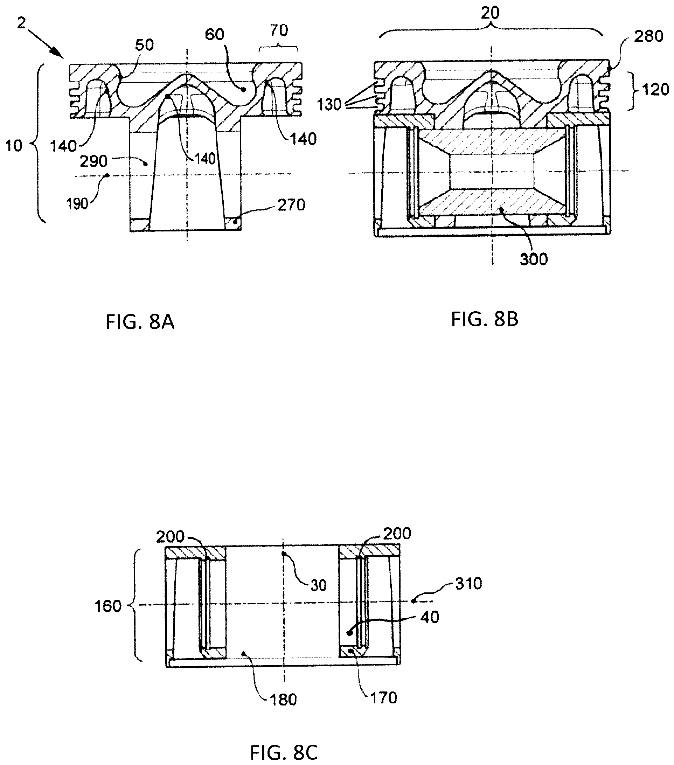

FIGS. 8A, 8B, and 8C are side cutaway views of another example piston 2. The piston 2 in FIGS. 8A, 8B, and 8C includes an upper part 10 and a lower part 160 connected by a joint with the use of the piston pin 300. The upper part 10 of the piston 2 can include combustion bowl 60, piston crown 70, top land 280 and ring land 120 that include ring grooves 130. An undercrown surface 140 is formed on an underside of the combustion bowl wall portion.

The undercrown 140 is defined here to be the surface that is visible, excluding the pin bores 290, when observing the piston straight on from the bottom. The upper part 10 further incorporates a lower part that includes a pair of pin bosses 270. The pin bosses 270 each having a pin bore 290 are laterally spaced from one another coaxially along a pin bore axis 190 that extends perpendicularly to the central longitudinal axis 30.

The lower part of piston 160 include a pair of pin bosses 170 and piston skirt 180; the pin bosses 170 each having a pin bore 40 are laterally spaced from one another coaxially along a pin bore axis 190 that extends perpendicularly to the central longitudinal axis 30. Each pin boss 170 have generally a snap ring groove 200 at their outer side; snap ring groove 200 are spaced from one another along the pin bore axis 310 to fit the piston pin. The upper part 10 and a lower part 160 can be made of different materials; upper part 10 and a lower part 160 can be made of MIM, casting forging, machining processes, etc., with similar materials and mixed combinations as shown in Table 1. The upper part 10 and a lower part 160 can be joined after machining and finishing, and assembled together with a piston pin and circlips.

With regard to one or more of the pistons 2 of FIGS. 1 to 8, the piston 2 produced as one piece from the steel can be manufactured using gravity casting or low pressure casting, for example. Additionally or alternatively, pistons 2 can be made from more than one piece, e.g., in which at least one piston part is made of MIM steel powder. The piston portions can be joined by different soldering or welding processes to obtain a monolithic piston.

Additionally or alternatively, a piston 2 constructed from more than one piece can also be assembled and joined by friction welding. Joining can also be carried out by means of sinter bonding, laser welding, induction welding, etc. A first blank to form a piston part is made of steel MIM, while the second blank can be manufactured by another process, for example micro-alloyed steel.

A process of metal injection molding can include various steps. First, an injectable starting material can be prepared, including a binder and very fine metal powder, containing more than 90% by weight of metal powder. Like plastic, this material is processed into molded parts (green parts) with a plastic injection machine (plastic injection molding). After injection, the binder content, which made the shaping possible, is leached out of the molded parts without the parts themselves losing their shape (brown parts).

Binders are mixtures of organic molecules such as paraslin wax, polyolefins and stearic acids. The composition of the binders determines the debinding mode for the green part. Debinding is possible in different ways, including but not limited to: Heating to melt, decompose, and ultimately evaporate the polymeric binder. This can be accomplished with care in order to avoid disruption of the as-molded part, and in this connection the use of binders with several ingredients which decompose or evaporate at different temperatures is advantageous. The time required for binder removal depends on the wall thickness of the part. Catalytic decomposition of feedstock using gaseous nitric acid or oxalic acid can reduced the time for binder removal and the risk of part disruption. Binder removal process is to dissolve out the binder with suitable solvents such as acetone, ethanol or hexane. Some binder constituents are even water soluble. Normally heating is used as a final step to complete the removal by evaporation

In a further step the parts can be sintered, thereby obtaining metallic properties. Sintering is the heating process in which the separate particles weld together and provide the necessary strength in the finished product.

The process can be carried out in controlled atmosphere furnaces, sometimes in a vacuum, at a temperature below the melting point of the metal. Sintering can be carried out either in a gaseous atmosphere or in a vacuum. To avoid oxidation of the metal, the atmospheres used are generally reducing. Apart from protecting the metal, such atmospheres have the further advantage of reducing the oxide on the surfaces of the powder particles. This surface oxide increases with decreasing particle size. The composition of the sintering atmosphere can depend on the metal being sintered. For many metals a straightforward atmosphere containing hydrogen is all that is required, but in the case of steels which have carbon as an essential alloying element, the atmosphere must be either inert or contain a carbon compound or compounds so that it is in equilibrium with the steel, e.g., it is neither carburise nor de-carburise the steel. As the 'brown' part is extremely porous, a very large shrinkage occurs during sintering and the sintering temperature is closely controlled in order to retain the shape and prevent 'slumping'. The metal powder used determines the mechanical and geometrical properties of the resulting piston. Preferred metal powder compositions include steel based powder for their strength and temperature resistance.

## Claims

1. A piston (100), comprising:
an upper part (10) providing an upper combustion surface including a top land (280), a land ring (120), a combustion bowl (60) and an undercrown surface (140) formed under the combustion bowl (60); and
a lower part (160) including pin bosses (170) and a piston skirt (180) formed under the undercrown surface (140), wherein at least one of the upper part (10) and the lower part (160) are formed with metal injection molding.

2. The piston (100) of claim 1, wherein the upper part (10) and the lower part (160) are formed as one piece.

3. The piston (100) of claim 1, wherein the upper part (10) and the lower part (160) are formed of two pieces.

4. The piston (100) of claim 1 or 3, wherein at least one of the upper part (10) and the lower part (160) are formed with metal injection molding and at least one of the upper part (10) and the lower part (160) are formed with another process.

5. The piston (100) of claim 4, wherein the other process comprises at least one of forging, casting and billet machining.

6. The piston (100) of any of claims 1-5, further comprising a cooling gallery (210).

7. The piston of claim 6, wherein the cooling gallery (210) is formed by more than one part.

8. The piston (100) of claim 6 or 7, wherein the upper part (10) forms a top surface of the cooling gallery (210).

9. The piston (100) of any of claims 6-8, wherein the lower part forms (160) a bottom surface of the cooling gallery (210).

10. The piston (100) of any of claims 1 or 3-5, where the upper part (10) and the lower part (160) are joined after machining and finishing, and assembled together with a piston pin.

11. A method of manufacturing a piston (100),
wherein the piston comprises:
an upper part (10) providing an upper combustion surface including a top land (280), a land ring (120), a combustion bowl (60) and an undercrown surface (140) formed under the combustion bowl (60); and
a lower part (160) including pin bosses (170) and a piston skirt (180) formed under the undercrown surface (140),
wherein the method comprises forming at least one of the upper part (10) and the lower part (160) with metal injection molding.

12. The method of claim 11, wherein the metal injection modling comprises the steps of:
- preparing an injectable starting material including a binder and metal powder,
- processing this injectable starting material into a molded part with a plastic injection machine,
- leaching out the binder of the molded part after injection.

13. The method of claim 12, wherein the metal injection molding comprises the addition step of sintering the molded part.

14. The method of claim 12 or 13, wherein the injectable starting material contains more than 90% by weight of metal powder.

15. The method of claim 14, wherein the metal powder has a melting temperature at which the metal powder will melt, and wherein the metal injection molding is performed at a temperature lower than the melting temperature of the metal powder.

## Patentansprüche

1. Kolben (100), Folgendes umfassend:
einen oberen Teil (10), der eine obere Verbrennungsfläche bereitstellt, die eine obere Anschlussfläche (280), einen Anschlussring (120), eine Brennraummulde (60) und eine Unterkronenfläche (140), die unter der Brennraummulde (60) gebildet ist, beinhaltet, und
einen unteren Teil (160), der Stiftnaben (170) und eine Kolbenschürze (180) beinhaltet, die unter der Unterkronenfläche (140) gebildet sind, wobei der obere Teil (10) und/oder der untere Teil (160) durch Metallspritzguss gebildet sind.

2. Kolben (100) nach Anspruch 1, wobei der obere Teil (10) und der untere Teil (160) als ein Stück gebildet sind.

3. Kolben (100) nach Anspruch 1, wobei der obere Teil (10) und der untere Teil (160) aus zwei Stücken gebildet sind.

4. Kolben (100) nach Anspruch 1 oder 3, wobei der obere Teil (10) und/oder der untere Teil (160) durch Metallspritzguss gebildet sind und der obere Teil (10) und/oder der untere Teil (160) durch einen anderen Prozess gebildet sind.

5. Kolben (100) nach Anspruch 4, wobei der andere Prozess Schmieden und/oder Gießen und/oder CNC-Bearbeitung umfasst.

6. Kolben (100) nach einem der Ansprüche 1 bis 5, ferner einen Kühlungsgang (210) umfassend.

7. Kolben (100) nach Anspruch 6, wobei der Kühlungsgang (210) aus mehr als einem Teil gebildet ist.

8. Kolben (100) nach Anspruch 6 oder 7, wobei der obere Teil (10) eine Oberseite des Kühlungsgangs (210) bildet.

9. Kolben (100) nach einem der Ansprüche 6 bis 8, wobei der untere Teil (160) eine Unterseite des Kühlungsgangs (210) bildet.

10. Kolben (100) nach einem der Ansprüche 1 oder 3 bis 5, wobei der obere Teil (10) und der untere Teil (160) nach der Bearbeitung und Endbearbeitung verbunden und mit einem Kolbenbolzen zusammengefügt werden.

11. Verfahren zur Herstellung eines Kolbens (100),
wobei der Kolben Folgendes umfasst:
einen oberen Teil (10), der eine obere Verbrennungsfläche bereitstellt, die eine obere Anschlussfläche (280), einen Anschlussring (120), eine Brennraummulde (60) und eine Unterkronenfläche (140), die unter der Brennraummulde (60) gebildet ist, beinhaltet, und
einen unteren Teil (160), der Stiftnaben (170) und eine Kolbenschürze (180) beinhaltet, die unter der Unterkronenfläche (140) gebildet sind,
wobei das Verfahren das Bilden des oberen Teils (10) und/oder des unteren Teils (160) durch Metallspritzgießen umfasst.

12. Verfahren nach Anspruch 11, wobei das Metallspritzgießen die folgenden Schritte umfasst:
- Erzeugen eines spritzfähigen Ausgangsmaterials, das ein Bindemittel und Metallpulver beinhaltet,
- Verarbeiten dieses spritzfähigen Ausgangsmaterials zu einem geformten Teil mit einer Kunststoffspritzmaschine,
- Extrahieren des Bindemittels des geformten Teils nach dem Spritzen.

13. Verfahren nach Anspruch 12, wobei das Metallspritzgießen den zusätzlichen Schritt des Sinterns des geformten Teils umfasst.

14. Verfahren nach Anspruch 12 oder 13, wobei das spritzfähige Ausgangsmaterial mehr als 90 Gew.-% Metallpulver enthält.

15. Verfahren nach Anspruch 14, wobei das Metallpulver eine Schmelztemperatur aufweist, bei der das Metallpulver schmelzen wird, und wobei das Metallspritzgießen bei einer Temperatur ausgeführt wird, die unter der Schmelztemperatur des Metallpulvers liegt.

## Revendications

1. Piston (100), comprenant :
une partie supérieure (10) fournissant une surface de combustion supérieure comprenant une couronne de piston (280), un segment annulaire (120), une chambre de combustion (60) et une surface de sous-couronne (140) formée sous la chambre de combustion (60) ; et
une partie inférieure (160) comprenant des bossages de logement d'axe (170) et une jupe de piston (180) formée sous la surface de sous-couronne (140), dans lequel au moins l'une des parties supérieure (10) et inférieure (160) est formée via moulage par injection de métal.

2. Piston (100) selon la revendication 1, dans lequel la partie supérieure (10) et la partie inférieure (160) sont formées en une seule pièce.

3. Piston (100) selon la revendication 1, dans lequel la partie supérieure (10) et la partie inférieure (160) sont formées en deux pièces.

4. Piston (100) selon la revendication 1 ou 3, dans lequel au moins l'une des parties supérieure (10) et inférieure (160) est formée via moulage par injection de métal et au moins l'une des parties supérieure (10) et inférieure (160) est formée via un autre processus.

5. Piston (100) selon la revendication 4, dans lequel l'autre processus comprend au moins le forgeage, le coulage et l'usinage de billettes.

6. Piston (100) selon l'une quelconque des revendications 1 à 5, comprenant également une galerie de refroidissement (210).

7. Piston selon la revendication 6, dans lequel la galerie de refroidissement (210) est formée par plusieurs parties.

8. Piston (100) selon la revendication 6 ou 7, dans lequel la partie supérieure (10) forme une surface de dessus de la galerie de refroidissement (210).

9. Piston (100) selon l'une quelconque des revendications 6 à 8, dans lequel la partie inférieure (160) forme une surface de dessous de la galerie de refroidissement (210).

10. Piston (100) selon l'une quelconque des revendications 1 ou 3 à 5, où la partie supérieure (10) et la partie inférieure (160) sont jointes après l'usinage et la finition, et assemblées ensemble avec un axe de piston.

11. Méthode pour la fabrication d'un piston (100),
dans laquelle le piston comprend :
une partie supérieure (10) fournissant une surface de combustion supérieure comprenant une couronne de piston (280), un segment annulaire (120), une chambre de combustion (60) et une surface de sous-couronne (140) formée sous la chambre de combustion (60) ; et
une partie inférieure (160) comprenant des bossages de logement d'axe (170) et une jupe de piston (180) formée sous la surface de sous-couronne (140),
dans laquelle la méthode comprend le formage d'au moins l'une des parties supérieure (10) et inférieure (160) via moulage par injection de métal.

12. Méthode selon la revendication 11, dans laquelle le moulage par injection de métal comprend les étapes suivantes :
- la préparation d'une matière première injectable comprenant une poudre métallique et un liant,
- le traitement de cette matière première injectable dans une partie moulée avec une machine d'injection de plastique,
- le lessivage du liant sur la partie moulée après l'injection.

13. Méthode selon la revendication 12, dans laquelle le moulage par injection de métal comprend l'étape supplémentaire de frittage de la partie moulée.

14. Méthode selon la revendication 12 ou 13, dans laquelle la matière première injectable contient plus de 90 % en poids de poudre métallique.

15. Méthode selon la revendication 14, dans laquelle la poudre métallique possède une température de fusion à laquelle la poudre métallique fond et dans laquelle le moulage par injection de métal est effectué à une température inférieure à la température de fusion de la poudre métallique.
